# EUROPEAN PATENT SPECIFICATION

(11) **EP 2 720 145 B1**
(45) Date of publication and mention of the grant of the patent: **03.12.2014**
(21) Application number: 12188499.3
(22) Date of filing: 15.10.2012
(51) Int. Cl.: G06F 9/44, H04M 1/725

(54) **Methods and systems for capturing high resolution content from applications**
Verfahren und Systeme zum Erfassen von hoch aufgelöstem Inhalt aus Applikationen
Procédés et systèmes pour capturer un contenu à haute résolution à partir d'applications

(43) Date of publication of application: 16.04.2014
(73) Proprietor: BlackBerry Limited, Waterloo, ON N2K 0A7 (CA)
(72) Inventor: Grifin, Jason,Tyler, Waterloo, Ontario N2L 3W8 (CA); Little, Herbert, Anthony, Waterloo, Ontario N2T 2W8 (CA)
(74) Representative: Moore, Barry

(56) References cited:
- WO-A1-2008/045782
- US-A1- 2009 055 736
- "Creating high resolution screenshots", , 27 June 2006 (2006-06-27), XP055055312, Retrieved from the Internet: URL:http://answers.google.com/answers/thre adview/id/741528.html [retrieved on 2013-03-05]
- "How to Get a High Resolution Screen Shot", , 13 January 2012 (2012-01-13), XP055055315, Retrieved from the Internet: URL:http://web.archive.org/web/20120113104 324/http://www.ehow.com/how_7367417_high-r esolution-screen-shot.html [retrieved on 2013-03-05]

## Description

### FIELD OF TECHNOLOGY

The present disclosure relates to electronic devices including, but not limited to, portable electronic devices and capturing application content on such devices.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones (smart phones), Personal Digital Assistants (PDAs), tablet computers, and laptop computers, with wireless network communications or near-field communications connectivity such as Bluetooth^{®} capabilities.

Portable electronic devices such as PDAs, or tablet computers are generally intended for handheld use and ease of portability. Smaller devices are generally desirable for portability. A touch-sensitive display, also known as a touchscreen display, is particularly useful on handheld devices, which are small and may have limited space for user input and output. The information displayed on the display may be modified depending on the functions and operations being performed.

An example operation performed on portable electronic devices is a screen capture operation. Some screen capture operations in devices known in the art capture only the information which is currently displayed on the display. Some devices also provide for capturing additional information. For example, U.S. Patent Application Publication No. 2009/0055736 to Yoon discloses a mobile terminal which is operable to capture and transmit information from a virtual screen which has a resolution higher than the native resolution supported by device's display screen and therefore can only be partially displayed but can be viewed incrementally by manipulating a scroll key, navigation key, or the like. As such, Yoon only discloses capturing a virtual screen, having a higher resolution than the device's native resolution, that is automatically provided by an application that does not, to accommodate the device's native resolution, shrink the resolution of what it attempts to have the device display. Moreover, the mobile terminal must have knowledge of how to invoke a scrolling operation in the application from which the virtual screen information is captured. The method of Yoon is thus only operable where an application provides information in a virtual screen within which a user may pan to view the information which is not currently displayed. In another example, PCT Publication No. WO 2008/045782 to Rodriguez et al. discloses systems and methods for isolating on-screen textual data wherein an image of a portion of the screen near a cursor is captured, and optical character recognition is performed on the captured image.

Improvements in screen capturing on portable electronic devices are desirable.

### SUMMARY

A method of capturing information from an application at a portable electronic device in accordance with claim 1 is provided. Advantageous features are provided in the dependent claims.

A portable electronic device in accordance with claim 14 is provided. Advantageous features are detailed in claim 15.

### BRI EF DESCRI PTI ON OF THE DRAWINGS

Embodiments of the present disclosure will now be described, by way of example only, with reference to the attached figures, wherein:
FIG. 1 is a block diagram of a portable electronic device in accordance with an example;
FIG. 2 is a flowchart illustrating an example of a method of capturing information from an application running on an electronic device;
FIG. 3 is a flowchart illustrating another example of a method of capturing information from an application running on an electronic device;
FIG. 3A is a flowchart illustrating another example of a method of capturing information from an application running on an electronic device; and
FIG. 4 is a flowchart illustrating an example of a method of processing information captured from an application running on an electronic device;
FIG. 5 is a flowchart illustrating another example of a method of processing information captured from an application running on an electronic device;
FIG. 6 shows an example of native-resolution content;
FIG. 6A and FIG. 6B show alternative examples of high-resolution content corresponding to the native-resolution content of FIG. 6;
FIG. 7 shows another example of native-resolution content; and,
FIG. 7A shows an example of high-resolution content corresponding to the native-resolution content of FIG. 7.

### DETAILED DESCRIPTION

The following describes an electronic device and method including receiving an OS-level screen-capture trigger from a user interface of the portable electronic device, and in response to the OS-level screen-capture trigger: reporting to an active application running on the portable electronic device a virtual resolution, which is higher than a native resolution available on a display of the portable electronic device; receiving high-resolution content from the active application, the high-resolution content formatted by the active application based on the virtual resolution; storing the high-resolution content at the portable electronic device; and, reporting the native resolution to the active application. Reporting the virtual resolution, receiving the high-resolution content, storing the high-resolution content, and reporting the native resolution all occur before a refresh of the display.

For simplicity and clarity of illustration, reference numerals may be repeated among the figures to indicate corresponding or analogous elements. Numerous details are set forth to provide an understanding of the examples described herein. The examples may be practiced without these details. In other instances, well-known methods, procedures, and components are not described in detail to avoid obscuring the examples described. The description is not to be considered as limited to the scope of the examples described herein.

The disclosure generally relates to an electronic device, such as a portable electronic device as described herein. Examples of electronic devices include mobile, or handheld, wireless communication devices such as pagers, cellular phones, cellular smart-phones, wireless organizers, personal digital assistants, wirelessly enabled notebook computers, tablet computers, mobile internet devices, electronic navigation devices, and so forth. The portable electronic device may also be a portable electronic device without wireless communication capabilities, such as a handheld electronic game device, digital photograph album, digital camera, media player, e-book reader, and so forth.

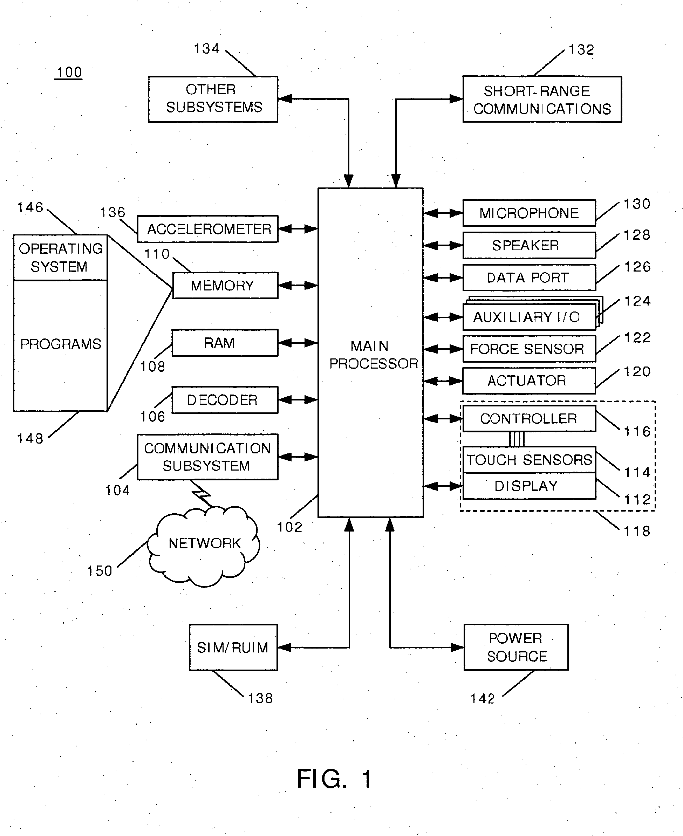

A block diagram of an example of a portable electronic device 100, also referred to as an electronic device 100 or a device 100, is shown in FIG. 1. The electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as a Random Access Memory (RAM) 108, memory 110, a touch-sensitive display 118, an optional actuator 120, an auxiliary input/output (I/O) subsystem 124, a data port 126, a speaker 128, a microphone 130, short-range communications 132 and other device subsystems 134. The memory 110 may include a plurality of memory elements of the same or different types, including read-only memory, non-volatile or persistent updatable memory, volatile memory, or other suitable storage elements. The touch-sensitive display 118 includes a display 112 and touch sensors 114 that are coupled to at least one controller 116 utilized to interact with the processor 102. Input via a graphical user interface is provided via the touch-sensitive display 118. Information, such as text, characters, symbols, images, icons, and other items that may be displayed or rendered on a portable electronic device, is displayed on the touch-sensitive display 118 via the processor 102. Optionally, the processor may interact with one or more force sensors 122.

To identify a subscriber for network access, the portable electronic device 100 may utilize a Subscriber Identity Module or a Removable User Identity Module (SIM/RUIM) card 138 for communication with a network, such as the wireless network 150. Alternatively, user identification information may be programmed into the memory 110.

The portable electronic device 100 includes an operating system 146 and software programs, applications, or components 148 that are executed by the processor 102 and are typically stored in a persistent, updatable store in the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing. The processor 102 may also interact with an accelerometer 136 to detect direction of gravitational forces or gravity-induced reaction forces that may determine the tilt of the portable electronic device 100.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth. A capacitive touch-sensitive display includes one or more capacitive touch sensors 114. The capacitive touch sensors may comprise any suitable material, such as indium tin oxide (ITO).

One or more touches, also known as touch contacts or touch events, may be detected by the touch-sensitive display 118. The processor 102 may determine attributes of the touch, including a location of the touch. Touch location data may include data for an area of contact or data for a single point of contact, such as a point at or near a center of the area of contact. The location of a detected touch may include x and y components, e.g., horizontal and vertical components, respectively, with respect to one's view of the touch-sensitive display 118. A touch may be detected from any suitable input member, such as a finger, thumb, appendage, or other objects, for example, a stylus, pen, or other pointer, depending on the nature of the touch-sensitive display 118. Multiple simultaneous touches may be detected.

One or more gestures may also be detected by the touch-sensitive display 118. A gesture, such as a swipe, also known as a flick, is a particular type of touch on a touch-sensitive display 118 and may begin at an origin point and continue to an end point, for example, a concluding end of the gesture. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture. A gesture may also include a hover. A hover may be a touch at generally unchanged location over a period of time or a touch associated with the same selection item for a period of time.

Optional force sensors 122 may be disposed in conjunction with the touch-sensitive display 118 to determine or react to forces applied to the touch-sensitive display 118. The force sensors 122 may be force-sensitive resistors, strain gauges, piezoelectric or piezoresistive devices, pressure sensors, quantum tunneling composites, force-sensitive switches, or other suitable devices. Force as utilized throughout the specification, including the claims, refers to force measurements, estimates, and/or calculations, such as pressure, deformation, stress, strain, force density, force-area relationships, thrust, torque, and other effects that include force or related quantities. Optionally, force information associated with a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zooming.

Portable electronic devices such as the device 100 of FIG. 1 typically have a number of user applications pre-loaded in the memory 110 along with the operating system 146, and also allow users to install additional applications (e.g., by downloading additional applications from an online store or the like). While any given application must have certain minimum prescribed characteristics in order to be compatible with the operating system 146, the particular features of compatible applications may vary greatly from application to application. As such, the operating system 146 may know only limited information about the functionality of certain applications.

Many applications designed for portable electronic devices include functionality for reformatting content provided by application based on the resolution of a display of the portable electronic device. For example, some applications may simply scale all of the features (e.g. text, images, etc.) of the content by the same amount based on the display resolution of the portable electronic device, some applications may scale certain features differently than other to maintain a desired layout or to maintain certain features within size constraints, and some applications may provide different versions of content for devices having different native resolutions.

Improved capturing of content from applications running on a portable electronic device may be realized by leveraging the reformatting and/or scaling capabilities of the applications themselves. The example methods described below advantageously make use of such reformatting and scaling capabilities without requiring any knowledge of how a particular application delivers content. The teachings of the present disclosure allow a user to capture content at a resolution higher than supported by a display of a portable electronic device from any application running on the device which is capable of supplying such content by invoking a screen capture event regardless of the manner in which the application scales or formats the content. Systems and methods according to example embodiments are thus advantageously operable to capture high-resolution content from an application running on a portable electronic device which would normally not provide such high-resolution content to the portable electronic device. For example, one or more predetermined or user-defined user inputs may be used to cause an operating system to automatically receive and store the high-resolution content from any of a variety of types of applications, including web browsers, mapping applications, social networking applications, camera applications, reference applications, news applications, games, tools, utilities, ebook readers, image viewers, or the like. The teachings of the present disclosure thus provide application-agnostic operating system-level tools that can be used to capture high-resolution content from any type of application, such that a user is provided with a generic screen capture experience in any context.

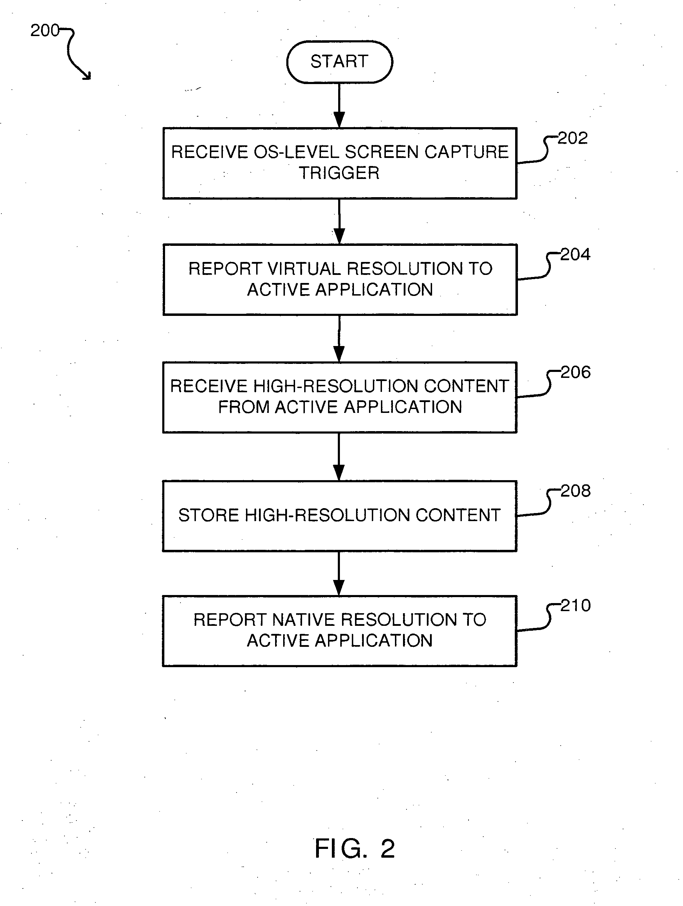

A flowchart of an example method 200 for capturing information from an active application running on a portable electronic device is shown in FIG. 2. An operating system (OS)-level screen capture trigger is received 202 from a user interface of the portable electronic device. The OS-level screen capture trigger may comprise, for example, one or more predetermined inputs such as a dedicated physical or virtual key, or a combination of physical and/or virtual keys pressed at the same time. The OS-level screen capture trigger causes the operating system to invoke a screen capture event.

In response to the OS-level screen capture trigger, the operating system reports 204 a virtual resolution to the active application. The virtual resolution is higher than a native resolution supported by the display of the portable electronic device. In other words, the operating system "tricks" the application into behaving as if the portable electronic device had a higher display resolution. In some devices, the processor is capable of handling significantly higher resolutions than the display is capable of displaying, such that in some embodiments the virtual resolution may be significantly higher than the native resolution of the display. The virtual resolution may be predetermined based on fixed characteristics of the portable electronic device (e.g. the capabilities of a graphics chip or the like), determined based on varying characteristics of the portable electronic device (e.g., processing resources being used by the active application, currently available memory, etc.), user selectable based on intended uses of the captured high-resolution content, or any combination thereof. For example, in some embodiments the virtual resolution is set based on processing capabilities and/or memory capacity of the portable electronic device. In some embodiments the virtual resolution is set such that a screen capture operation may be completed before the display is refreshed. In some embodiments, the virtual resolution may be set according to user-defined preferences or context-dependent parameters, for example a resolution selected for sending the high-resolution content to and/or to facilitate handling the high-resolution content on another device such as a television or other display device, a desktop, laptop, tablet or handheld computing device, a printer, or the like.

In some embodiments, the virtual resolution reported 204 to the active application is set based on results of prior screen capture operations. For example, in some embodiments the operating system logs information related to capturing of high-resolution content when reporting a particular virtual resolution to the active application (e.g., the time and/or computing resources required for the capture, the amount of useful information in the high-resolution content, or other information related to the capturing high-resolution content), and uses the logged information for setting the virtual resolution reported to that application in future screen capture operations.

After reporting 204 the virtual resolution to the active application, the operating system receives 206 high-resolution content from the active application which has been formatted based on the virtual resolution. Formatting of the high-resolution content is accomplished according to the inherent functionality provided by the active application. Once the high-resolution content has been received 206 from the active application, the high-resolution content is stored 208 at the portable electronic device (i.e., in a suitable location in a volatile or non-volatile memory element such as, for example a clipboard, a file storage area for an image-viewing application, or another suitable location), and the operating system reports 210 the native resolution to the active application, such that native resolution content may be displayed. Although storing 208 the high-resolution content is shown before reporting 210 the native resolution in FIG. 2, it is to be understood that these two operations may occur simultaneously, or their order may be reversed, so long as both occur after the high-resolution content is received 206. In some embodiments, reporting 210 the native resolution to the active application occurs before the display of the portable electronic device is refreshed after reporting 204 the virtual resolution, such that a user viewing native-resolution content will not see any interruption of the native-resolution content displayed on the portable electronic device.

In some embodiments, the method 200 also comprises logging information about capturing high-resolution content from the active application to provide feedback for subsequent screen capture operations. Such logging may, for example, be carried out by the operating system at any suitable point in the method 200, such as during or after any of receiving 206 the high-resolution content, storing 208 the high resolution content, and/or reporting 210 the native resolution. For example, the operating system may store information regarding the time and/or computing resources required for capturing the high-resolution content from an application, and adjust the virtual resolution reported 204 to the application in a subsequent instance of the method 200 based on the stored information (e.g. by decreasing the virtual resolution when the screen capture takes longer than desirable and/or causes a strain on computing resources, or conversely, increasing the virtual resolution when the screen capture takes a relatively short amount of time and/or is accomplished without straining computing resources). In another example, the operating system may store information regarding the amount of useful information in the high-resolution content (which may be determined based on results of image recognition or other additional processing performed on the high-resolution content, as described below), and adjust the virtual resolution reported 204 to the application in a subsequent instance of the method 200 based on the stored information. For example, if a virtual resolution of 7200x4800 is reported 204, but the high-resolution content received 206 from the application has a resolution of only 1440x960, the operating system may log this information and report 204 a virtual resolution of 1440x960 the next time the method 200 is invoked while using that application. Similarly, if an application is unable to deliver content at a resolution higher than the native resolution, that fact may be logged such that only the native resolution is used to capture content from that application. Thus, a generic tool for capturing high-resolution content from any application, according to the method 200 of FIG. 2, may also "learn" (by logging information about capturing the high-resolution content) about the applications for improved performance of future screen capture operations.

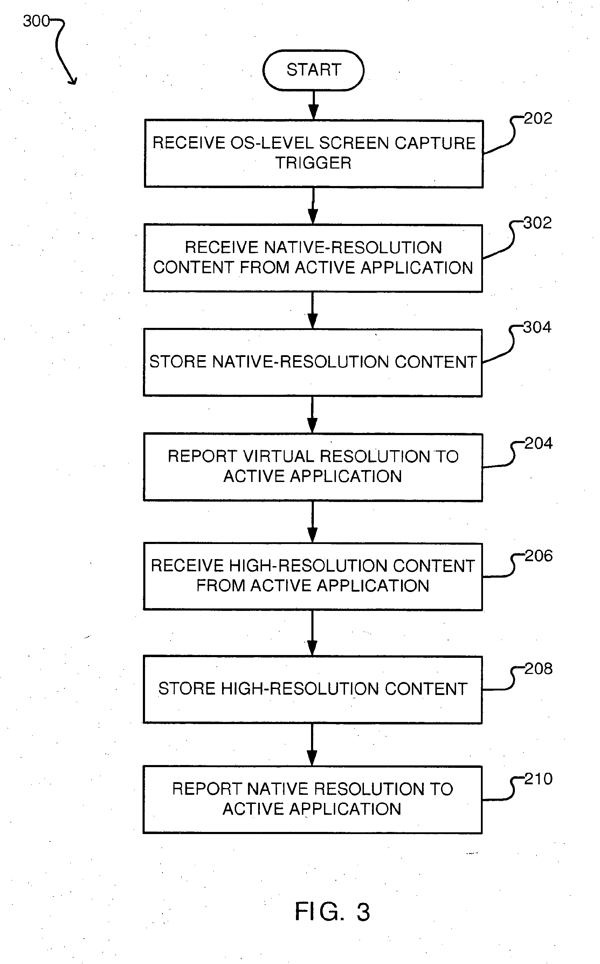

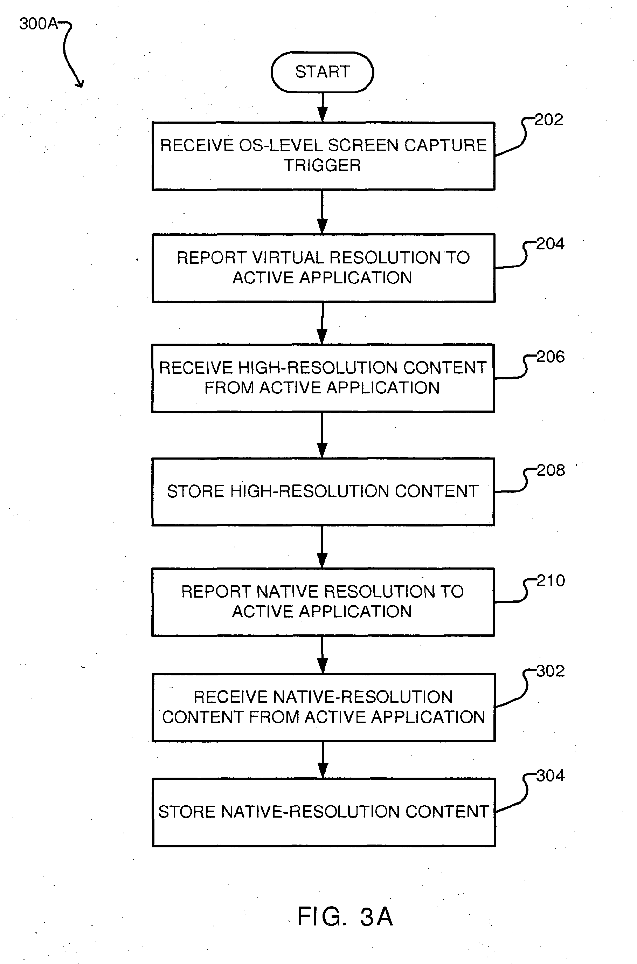

FIG. 3 and FIG. 3A respectively show other example methods 300 and 300A for capturing information from an active application running on a portable electronic device. The method 300 of FIG. 3 is similar to the method 200 of FIG. 2 in that the steps at 202, 204, 206, 208 and 210 also occur in the methods 300 and 300A of FIG. 3 and FIG. 3A and as such will not be described again. The methods 300 and 300A of FIG. 3 and FIG. 3A differ from the method 200 of FIG. 2 in that they capture native-resolution content in addition to high-resolution content.

In the example method 300 of FIG. 3, after receiving 202 the OS-level screen capture trigger, the operating system receives 302 native-resolution content from the active application and stores 304 the native-resolution content at the portable electronic device (i.e., in a suitable location in a volatile or non-volatile memory element such as, for example a clipboard, a file storage area for an image-viewing application, or another suitable location). The native-resolution content may be stored in the same memory element as the high-resolution content or in a different memory element. As one skilled in the art will appreciate, receiving 302 the native-resolution content occurs before reporting 204 the virtual resolution in the method 300 of FIG. 3, but storing 304 the native-resolution content may occur before, after, or concurrent with reporting 204 the virtual resolution. In the example method 300A of FIG. 3A, after reporting 210 the native resolution to the active application, the operating system receives 302 native-resolution content from the active application and stores 304 the native-resolution content.

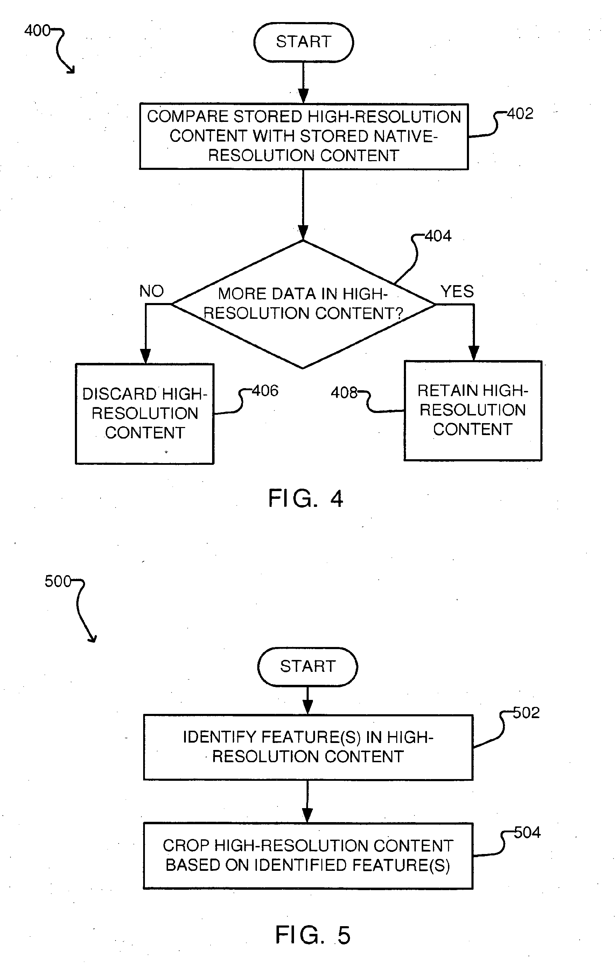

In some implementations, additional processing may be performed (e.g. by the operating system itself as part of the screen capture event or by separate graphics processing routines) on the high-resolution content captured by methods such as the example method 200 of FIG. 2 or high-resolution and native-resolution content captured by methods such as the example methods 300 and 300A of FIG. 3 and FIG. 3A. Such further processing may occur automatically in some embodiments, or may selectively occur according to user-defined preferences in some embodiments. In some embodiments, such further processing occurs in the background after a screen capture operation is complete, such that the user can continue working in the active application and computing resources are not diverted from the active application. Examples of such further processing are described below with reference to FIG. 4 and FIG. 5.

A flowchart of an example method 400 for further processing of high-resolution and native-resolution content is shown in FIG. 4. The high-resolution content and native resolution content stored at the portable electronic device are compared 402 to determine 404 whether there is more useful information or data in the high-resolution content. When the high-resolution content does not contain more data, the high-resolution content is discarded 406. When the high-resolution content does contain more data, the high-resolution content is retained 408. In some embodiments, when the high-resolution content contains more data and is retained 408, the native-resolution content is discarded. In other embodiments, the native-resolution content is also retained when the high-resolution content is retained 408, such that the native-resolution content may be used as a reference for the user to identify the source of the high-resolution content (since, in some embodiments, the user might not see the high-resolution content when it is captured). For example, the native-resolution content may be used to provide a thumbnail image in a list of images stored in an image-viewing application, and the high-resolution content may be used when the user selects the thumbnail image to view the content, for example by displaying additional details of features shown in the native-resolution content when the user zooms in or by displaying additional information beyond that available in the native-resolution content when the user zooms out. The determination 404 of the relative levels of useful data may depend on the type of application from which the content was captured and/or user-defined preferences. For example, in some embodiments the determination 404 may be based on the relative file sizes of the stored high-resolution content and native-resolution content, such that unless the file size of the high-resolution content is greater that the file size of the native-resolution content, the high-resolution content is discarded. In some embodiments when the captured content includes a picture, the determination 404 may be based on the relative image sizes of the stored high-resolution content and native-resolution content, such that unless the image size of the high-resolution content is greater that the image size of the native-resolution content, the high-resolution content is discarded. Image sizes may be determined, for example, by differentiating between background pixels and picture pixels in an image, and using the number of picture pixels as the image size. In some embodiments when the captured content includes text, the determination 404 may be based on the relative numbers of text characters recognized in the stored high-resolution content and native-resolution content, such that unless the number of characters recognized in the high-resolution content is greater that the number of characters recognized in the native-resolution content, the high-resolution content is discarded. In some embodiments, the determination 404 may be based on other parameters of the stored high-resolution and native-resolution content, or based on combinations of parameters of the stored high-resolution and native-resolution content.

A flowchart of an example method 500 for further processing of high-resolution content is shown in FIG. 5. One or more features in the high-resolution content are identified 502. Identification 502 may include, for example, performing character recognition on the high-resolution content, receiving layout information from a layout manager of the active application, identifying a table in the high-resolution content, identifying a picture in the high-resolution content, identifying a border in the high-resolution content, identifying an area containing text in the high-resolution content, identifying features based in the high-resolution content based on features of the native resolution content, or any combination thereof. The high-resolution content is cropped 504 based on the identified features(s). Cropping 504 may comprise, for example, cropping areas of the high-resolution content identified as background (e.g., removing background areas around pictures or the like), cropping the high-resolution content to remove areas around a table, comprises cropping material outside of an identified border, cropping material outside of an area identified as containing text, or any combination thereof. The method 500 of FIG. 5 is implemented as a background process in some embodiments, such that identifying 502 features in the high-resolution content and cropping 504 the high-resolution content are carried out when processing capabilities are not being used by the active application or other processes running on the device.

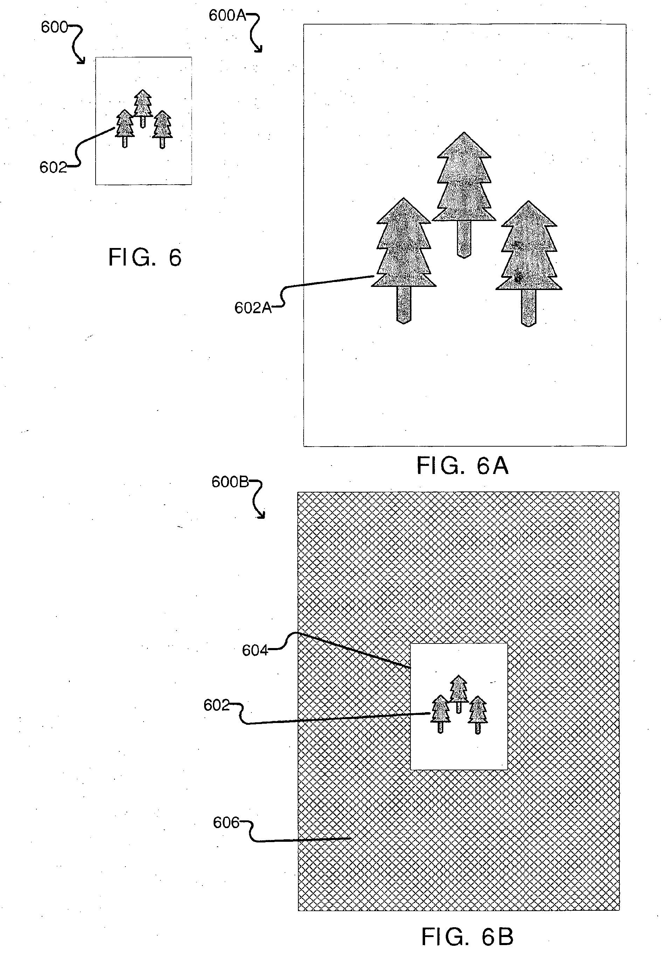

Examples of the operation of the method 400 of FIG. 4 will now be described with reference to FIG. 6, FIG. 6A and FIG. 6B. FIG. 6 shows example native-resolution content 600 comprising a picture 602. FIG. 6A shows one type of example high-resolution content 600A comprising a larger picture 602A. FIG. 6B shows another type of example high-resolution content 600B comprising the same picture 602 as the native-resolution content 600 of FIG. 6. In FIG. 6B, the high-resolution content 600B also comprises a border 604 separating the picture 602 from a background area 606. The picture 602A of FIG. 6A thus has a larger image size than the picture 602 of FIG. 6 and FIG. 6B. In situations where native-resolution content 600 and high-resolution content 600A are received from the active application, the method 400 of FIG. 4 results in the native-resolution content 600 being discarded at 408. In situations where native-resolution content 600 and high-resolution content 600B are received from the active application, the method 400 of FIG. 4 results in the high-resolution content 600B being discarded at 406.

With continued reference to FIG. 6B, in an example of the operation of the method 500 of FIG. 5, the border 604 is identified at 502. The background area 606 outside of the border 604 is cropped at 504.

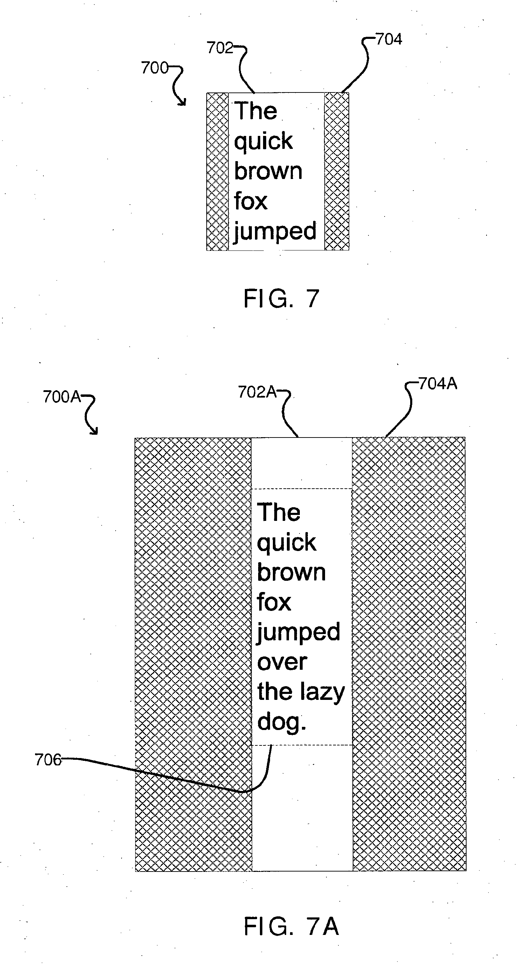

Another example of the operation of the method 500 of FIG. 5 will now be described with reference to FIG. 7 and FIG. 7A. FIG. 7 shows example native-resolution content 700 comprising a text column 702 with background areas 704 on either side thereof. FIG. 7A shows example high-resolution content 700A comprising a larger text column 702A and larger background areas 704A on either side thereof. The text column 702A of FIG. 7A also contains a significant amount of whitespace. In an example operation of the method 500, an area 706 containing text is identified at 502, and material outside of the area 706 is cropped at 504. In some embodiments, identification 502 of the area 706 containing text may be based on the fact that the corresponding native-resolution content 700 comprises mostly text, thus implying that the user is interested in capturing text. In other embodiments, identification 502 of features in the high-resolution content 700A may be made based only on the high-resolution content 700A itself, without reference to any native-resolution content.

The present disclosure may be embodied in other specific forms without departing from its essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A method (200) of capturing information from an application at a portable electronic device (100), the method comprising:
receiving (202) an OS-level screen-capture trigger from a user interface of the portable electronic device;
in response to the OS-level screen-capture trigger:
reporting (204) to an active application running on the portable electronic device a virtual resolution, which is higher than a native resolution available on a display of the portable electronic device;
receiving (206) high-resolution content from the active application, the high-resolution content formatted by the active application based on the virtual resolution;
storing (208) the high-resolution content at the portable electronic device; and,
reporting (210) the native resolution to the active application,
wherein reporting the virtual resolution, receiving the high-resolution content, storing the high-resolution content, and reporting the native resolution all occur before a refresh of the display.

2. The method of claim 1, further comprising:
subsequent to the OS-level screen-capture trigger, receiving (302) native-resolution content from the active application, formatted based on the native resolution; and
storing (304) the native-resolution content at the portable electronic device.

3. The method of claim 2, wherein the native-resolution content is received (302) prior to reporting the virtual resolution.

4. The method of claim 2 or 3, further comprising comparing (402) the high-resolution content to the native-resolution content and, based on the comparison, discarding (406) the high-resolution content if the high-resolution content does not contain more useful information than the native-resolution content, and retaining (408) the high-resolution content if the high-resolution content does contain more useful information than the native-resolution content.

5. The method of claim 4, wherein comparing (402) comprises comparing a file size of the high-resolution content to a file size of the native-resolution content, or comparing an image size of the high-resolution content to an image size of the native-resolution content, or comparing a number of recognized text characters in the high-resolution content to a number of recognized text characters in the native-resolution content.

6. The method of any preceding claim, further comprising:
identifying (502) at least one feature of the high-resolution content; and
cropping (504) the high-resolution content based on the at least one identified feature.

7. The method of claim 6, wherein identifying (502) comprises receiving layout information from a layout manager of the active application, or identifying a table in the high-resolution content, or identifying a border in the high-resolution content and cropping comprises cropping material outside of the border, or identifying comprises identifying an area containing text in the high-resolution content and cropping comprises cropping material outside of the area containing text.

8. The method of any one of claims 1 to 7, further comprising performing character recognition on an image of the high-resolution content.

9. The method of any preceding claim, further comprising logging information related to capturing the high-resolution content.

10. The method of claim 9, wherein logging comprises storing a time required for capturing the high-resolution content, or storing an indication of an amount of useful information in the high-resolution content.

11. The method of any preceding claim, further comprising setting the virtual resolution based on previously logged information.

12. The method of claim 11, wherein the previously logged information comprises a time required for capturing high-resolution content from the active application, and wherein setting the virtual resolution comprises adjusting a previously used virtual resolution based on the time required for capturing high-resolution content from the active application.

13. The method of claim 11, wherein the previously logged information comprises an indication of an amount of useful information in previously-captured high-resolution content, and wherein setting the virtual resolution comprises adjusting a previously used virtual resolution based on the indication of the amount of useful information in previously-captured high-resolution content.

14. A portable electronic device (100) comprising a display(112), a user interface and at least one processor (102) operably connected to the display and the user interface, and configured to:
receive (202) an OS-level screen-capture trigger from the user interface; in response to the OS-level screen-capture trigger:
report (204) to an active application running on the portable electronic device a virtual resolution, which is higher than a native resolution available on the display of the portable electronic device;
receive (206) high-resolution content from the active application, the high-resolution content formatted by the active application based on the virtual resolution;
store (208) the high-resolution content at the portable electronic device; and,
report (210) the native resolution to the active application,
wherein the processor is configured to report the virtual resolution, receive the high-resolution content, store the high-resolution content, and report the native resolution before a refresh of the display.

15. The portable electronic device of claim 14, wherein the processor is configured to set the virtual resolution based on previously logged information about the active application.

## Patentansprüche

1. Verfahren (200) zum Erfassen von Information von einer Anwendung an einer tragbaren Elektronikvorrichtung (100), wobei das Verfahren Folgendes aufweist:
Empfangen (202) eines Bildschirmerfassungs-Auslösers auf Betriebssystemebene von einer Benutzerschnittstelle der tragbaren Elektronikvorrichtung,
als Reaktion auf den Bildschirmerfassungs-Auslöser auf Betriebssystemebene:
Berichten (204) einer virtuellen Auflösung an eine aktive Anwendung, die auf der tragbaren Elektronikvorrichtung arbeitet, die höher als eine native Auflösung ist, die auf einer Anzeige der tragbaren Elektronikvorrichtung verfügbar ist,
Empfangen (206) eines hoch aufgelösten Inhalts von der aktiven Anwendung, wobei der hoch aufgelöste Inhalt von der aktiven Anwendung basierend auf der virtuellen Auflösung formatiert ist,
Speichern (208) des hoch aufgelösten Inhalts auf der tragbaren Elektronikvorrichtung und
Berichten (210) der nativen Auflösung an die aktive Anwendung, wobei das Berichten der virtuellen Auflösung, das Empfangen des hoch aufgelösten Inhalts, das Speichern des hoch aufgelösten Inhalts und das Berichten der nativen Auflösung alles vor einem Auffrischen der Anzeige erfolgt.

2. Verfahren nach Anspruch 1, ferner mit:
auf den Bildschirmerfassungs-Auslöser auf Betriebssystemebene folgendes Empfangen (302) eines nativ aufgelösten Inhalts von der aktiven Anwendung, der basierend auf der nativen Auflösung formatiert ist, und
Speichern (304) des nativ aufgelösten Inhalts an der tragbaren Elektronikvorrichtung.

3. Verfahren nach Anspruch 2, wobei der nativ aufgelöste Inhalt vor dem Berichten der virtuellen Auflösung empfangen (302) wird.

4. Verfahren nach Anspruch 2 oder 3, ferner mit Vergleichen (402) des hoch aufgelösten Inhalts mit dem nativ aufgelösten Inhalt, Verwerfen (406) des hoch aufgelösten Inhalts aufgrund des Vergleichs, wenn der hoch aufgelöste Inhalt nicht mehr nützliche Information als der nativ aufgelöste Inhalt aufweist, und Beibehalten (408) des hoch aufgelösten Inhalts, wenn der hoch aufgelöste Inhalt mehr nützliche Information als der nativ aufgelöste Inhalt aufweist.

5. Verfahren nach Anspruch 4, wobei das Vergleichen (402) ein Vergleichen einer Dateigröße des hoch aufgelösten Inhalts mit einer Dateigröße des nativ aufgelösten Inhalts oder ein Vergleichen einer Bildgröße des hoch aufgelösten Inhalts mit einer Bildgröße des nativ aufgelösten Inhalts oder ein Vergleichen einer Anzahl von erkannten Textzeichen im hoch aufgelösten Inhalt mit einer Anzahl von erkannten Textzeichen im nativ aufgelösten Inhalt aufweist.

6. Verfahren nach einem der vorhergehenden Ansprüche, ferner mit:
Identifizieren (502) mindestens eines Merkmals des hoch aufgelösten Inhalts und
Abschneiden (504) des hoch aufgelösten Inhalts aufgrund des mindestens einen identifizierten Merkmals.

7. Verfahren nach Anspruch 6, wobei das Identifizieren (502) ein Empfangen von Anordnungsinformation von einer Anordnungsverwaltungseinrichtung der aktiven Anwendung oder ein Identifizieren einer Tabelle in dem hoch aufgelösten Inhalt oder ein Identifizieren eines Rands in dem hoch aufgelösten Inhalt aufweist und das Abschneiden ein Abschneiden von Material außerhalb des Rands aufweist oder das Identifizieren ein Identifizieren eines Bereichs, der Text beinhaltet, in dem hoch aufgelösten Inhalt aufweist und das Abschneiden ein Abschneiden von Material außerhalb des Bereichs, der Text beinhaltet, aufweist.

8. Verfahren nach einem der Ansprüche 1 bis 7, ferner mit Durchführen einer Zeichenerkennung auf einem Bild des hoch aufgelösten Inhalts.

9. Verfahren nach einem der vorhergehenden Ansprüche, ferner mit Aufzeichnen von Information, die das Erfassen des hoch aufgelösten Inhalts betrifft.

10. Verfahren nach Anspruch 9, wobei das Aufzeichnen ein Speichern einer Zeit, die zum Erfassen des hoch aufgelösten Inhalts benötigt wird, oder ein Speichern einer Angabe einer Menge nützlicher Information in dem hoch aufgelösten Inhalt aufweist.

11. Verfahren nach einem der vorhergehenden Ansprüche, ferner mit Einstellen der virtuellen Auflösung aufgrund einer zuvor aufgezeichneten Information.

12. Verfahren nach Anspruch 11, wobei die zuvor aufgezeichnete Information eine Zeit aufweist, die für ein Erfassen von hoch aufgelöstem Inhalt von der aktiven Anwendung benötigt wird und wobei das Einstellen der virtuellen Auflösung ein Anpassen einer zuvor verwendeten virtuellen Auflösung basierend auf der Zeit aufweist, die zum Erfassen eines hoch aufgelösten Inhalts von der aktiven Anwendung benötigt wird.

13. Verfahren nach Anspruch 11, wobei die zuvor aufgezeichnete Information eine Angabe einer Menge nützlicher Information in zuvor erfasstem hoch aufgelöstem Inhalt aufweist, und wobei das Einstellen der virtuellen Auflösung ein Anpassen einer zuvor verwendeten virtuellen Auflösung auf der Angabe der Menge nützlicher Information in zuvor erfasstem hoch aufgelöstem Inhalt aufweist.

14. Tragbare Elektronikvorrichtung (100) mit einer Anzeige (112), einer Benutzerschnittstelle und mindestens einem Prozessor (102), der betrieblich mit der Anzeige und der Benutzerschnittstelle verbunden ist und dazu konfiguriert ist,
einen Bildschirmerfassungs-Auslöser auf Betriebssystemebene von der Benutzerschnittstelle zu empfangen (202),
als Reaktion auf den Bildschirmerfassungs-Auslöser auf Betriebssystemebene:
an eine aktive Anwendung (204), die auf der tragbaren Elektronikvorrichtung arbeitet, eine virtuelle Auflösung zu berichten, die höher als eine native Auflösung ist, die auf der Anzeige der tragbaren Elektronikvorrichtung verfügbar ist,
hoch aufgelösten Inhalt von der aktiven Anwendung zu empfangen (206), wobei der hoch aufgelöste Inhalt von der aktiven Anwendung basierend auf der virtuellen Auflösung formatiert ist,
den hoch aufgelösten Inhalt auf der tragbaren Elektronikvorrichtung zu speichern (208) und
die native Auflösung an die aktive Anwendung zu berichten (210), wobei der Prozessor dazu konfiguriert ist, vor einem Auffrischen der Anzeige die virtuellen Auflösung zu berichten, den hoch aufgelösten Inhalt zu empfangen, den hoch aufgelösten Inhalt zu speichern und die native Auflösung zu berichten.

15. Tragbare Elektronikvorrichtung nach Anspruch 14, wobei der Prozessor dazu konfiguriert ist, die virtuelle Auflösung basierend auf einer zuvor aufgezeichneten Information bezüglich der aktiven Anwendung einzustellen.

## Revendications

1. Procédé (200) de capture d'informations à partir d'une application au niveau d'un dispositif électronique portable (100), le procédé comprenant le fait :
de recevoir (202) un événement déclencheur de capture d'écran au niveau du système d'exploitation (OS) à partir d'une interface utilisateur du dispositif électronique portable ;
en réponse à l'événement déclencheur de capture d'écran au niveau du OS :
de rapporter (204) à une application active s'exécutant sur le dispositif électronique portable une résolution virtuelle, qui est supérieure à une résolution native disponible sur un écran d'affichage du dispositif électronique portable ;
de recevoir (206) un contenu à haute résolution à partir de l'application active, le contenu à haute résolution étant formaté par l'application active sur la base de la résolution virtuelle ;
de stocker (208) le contenu à haute résolution au niveau du dispositif électronique portable ; et,
de rapporter (210) la résolution native à l'application active, dans lequel le fait de rapporter la résolution virtuelle, de recevoir le contenu à haute résolution, de stocker le contenu à haute résolution, et de rapporter la résolution native surviennent tous avant un rafraîchissement de l'écran d'affichage.

2. Procédé de la revendication 1, comprenant en outre le fait :
de recevoir (302), suite à l'événement déclencheur de capture d'écran au niveau du OS, un contenu à résolution native à partir de l'application active, formaté sur la base de la résolution native ; et
de stocker (304) le contenu à résolution native au niveau du dispositif électronique portable.

3. Procédé de la revendication 2, dans lequel le contenu à résolution native est reçu (302) avant de rapporter la résolution virtuelle.

4. Procédé de la revendication 2 ou 3, comprenant en outre le fait de comparer (402) le contenu à haute résolution au contenu à résolution native et, sur la base de la comparaison, de supprimer (406) le contenu à haute résolution si le contenu à haute résolution ne contient pas des informations plus utiles que le contenu à résolution native, et de retenir (408) le contenu à haute résolution si le contenu à haute résolution contient des informations plus utiles que le contenu à résolution native.

5. Procédé de la revendication 4, dans lequel la comparaison (402) comprend le fait de comparer une taille de fichier du contenu à haute résolution à une taille de fichier du contenu à résolution native, ou de comparer une taille d'image du contenu à haute résolution à une taille d'image du contenu à résolution native, ou de comparer un nombre de caractères de texte reconnus dans le contenu à haute résolution à un nombre de caractères de texte reconnus dans le contenu à résolution native.

6. Procédé de l'une des revendications précédentes, comprenant en outre le fait :
d'identifier (502) au moins une caractéristique du contenu à haute résolution ; et
de recadrer (504) le contenu à haute résolution sur la base de l'au moins une caractéristique identifiée.

7. Procédé de la revendication 6, dans lequel l'identification (502) comprend le fait de recevoir des informations de mise en page à partir d'un gestionnaire de mise en page de l'application active, ou d'identifier un tableau dans le contenu à haute résolution, ou d'identifier une bordure dans le contenu à haute résolution et le recadrage comprend le fait de recadrer de la matière en dehors de la bordure, ou l'identification comprend le fait d'identifier une zone contenant un texte dans le contenu à haute résolution et le recadrage comprend le fait de recadrer de la matière en dehors de la zone contenant un texte.

8. Procédé de l'une des revendications 1 à 7, comprenant en outre le fait d'effectuer une reconnaissance de caractères sur une image du contenu à haute résolution.

9. Procédé de l'une des revendications précédentes, comprenant en outre le fait d'enregistrer des informations relatives à la capture du contenu à haute résolution.

10. Procédé de la revendication 9, dans lequel l'enregistrement comprend le fait de stocker un temps nécessaire pour capturer le contenu à haute résolution, ou de stocker une indication d'une quantité d'informations utiles dans le contenu à haute résolution.

11. Procédé de l'une des revendications précédentes, comprenant en outre le fait de régler la résolution virtuelle sur la base des informations enregistrées précédemment.

12. Procédé de la revendication 11, dans lequel les informations enregistrées précédemment comprennent un temps nécessaire pour capturer un contenu à haute résolution à partir de l'application active, et dans lequel le réglage de la résolution virtuelle comprend le fait d'ajuster une résolution virtuelle utilisée précédemment sur la base du temps nécessaire pour capturer le contenu à haute résolution à partir de l'application active.

13. Procédé de la revendication 11, dans lequel les informations enregistrées précédemment comprennent une indication d'une quantité d'informations utiles dans un contenu à haute résolution capturé précédemment, et dans lequel le réglage de la résolution virtuelle comprend le fait d'ajuster une résolution virtuelle utilisée précédemment sur la base de l'indication de la quantité d'informations utiles dans un contenu à haute résolution capturé précédemment.

14. Dispositif électronique portable (100) comprenant un écran d'affichage (112), une interface utilisateur et au moins un processeur (102) relié de manière fonctionnelle à l'écran d'affichage et à l'interface utilisateur, et configuré pour :
recevoir (202) un événement déclencheur de capture d'écran au niveau du OS à partir de l'interface utilisateur ;
en réponse à l'événement déclencheur de capture d'écran au niveau du OS :
rapporter (204) à une application active s'exécutant sur le dispositif électronique portable une résolution virtuelle, qui est supérieure à une résolution native disponible sur l'écran d'affichage du dispositif électronique portable ;
recevoir (206) un contenu à haute résolution à partir de l'application active, le contenu à haute résolution étant formaté par l'application active sur la base de la résolution virtuelle ;
stocker (208) le contenu à haute résolution au niveau du dispositif électronique portable ; et,
rapporter (210) la résolution native à l'application active,
dans lequel le processeur est configuré pour rapporter la résolution virtuelle, recevoir le contenu à haute résolution, stocker le contenu à haute résolution, et rapporter la résolution native avant un rafraîchissement de l'écran d'affichage.

15. Dispositif électronique portable de la revendication 14, dans lequel le processeur est configuré pour régler la résolution virtuelle sur la base des informations enregistrées précédemment concernant l'application active.
